# FASCICULE DE BREVET EUROPEEN

(11) **EP 3 523 504 B1**
(45) Date de publication et mention de la délivrance du brevet: **02.09.2020**
(21) Numéro de dépôt: 17786976.5
(22) Date de dépôt: 03.10.2017
(51) Int. Cl.: E21D 9/00, E21D 11/40

(54) **DISPOSITIF ET PROCÉDÉ DE PRISE ET DE POSE AUTOMATISÉE D'UN VOUSSOIR POUR FORMER UN REVÊTEMENT D'UN TUNNEL**
VORRICHTUNG UND VERFAHREN ZUM AUTOMATISIERTEN AUFNEHMEN UND PLATZIEREN EINES SEGMENTS ZUR HERSTELLUNG EINER TUNNELAUSKLEIDUNG
A DEVICE AND METHOD FOR THE AUTOMATED PICKING UP AND PLACING A SEGMENT FOR FORMING A TUNNEL LINING

(30) Priorité: 04.10.2016 FR 1659588
(43) Date de publication de la demande: 14.08.2019
(73) Titulaire: Bouygues Travaux Publics, 78280 Guyancourt (FR)
(72) Inventeur: MOUTON, Lucas, 78000 Versailles (FR); DEMUYNCK, Nicolas, 91460 Marcoussis (FR)
(74) Mandataire: Regimbeau
(86) Numéro de dépôt international: PCT/FR2017/052719
(87) Numéro de publication internationale: WO 2018/065726

(56) Documents cités:
- EP-A1- 0 791 725
- US-A1- 2015 308 268

## Description

### DOMAINE DE L'INVENTION

La présente invention concerne un dispositif pour la prise et la pose automatisée d'un voussoir destiné à être couplé à un tunnelier pourvu d'un érecteur de voussoirs, ainsi qu'un procédé de prise et de pose automatisée de voussoirs mettant en oeuvre un tel dispositif.

### ARRIERE PLAN DE L'INVENTION

Le revêtement d'un tunnel est généralement constitué de voussoirs préfabriqués agencés sous la forme d'une pluralité d'anneaux successifs.

Au fur et à mesure de l'avancée du tunnelier, un nouvel anneau est construit en assemblant successivement une pluralité de voussoirs contre un anneau posé précédemment.

La face avant de chaque nouvel anneau (c'est-à-dire la face orientée vers la tête de coupe du tunnelier) sert de surface d'appui pour des vérins de poussée situés à l'arrière du bouclier du tunnelier (c'est-à-dire du côté opposé à la tête de coupe) et destinés à exercer la poussée nécessaire au creusement du terrain excavé.

La pose des voussoirs est réalisée par un érecteur, c'est-à-dire une machine permettant la préhension d'un voussoir à partir d'un magasin agencé à l'arrière du bouclier du tunnelier, puis son déplacement vers son emplacement prévu pour former l'anneau. L'érecteur est un composant du bouclier du tunnelier, situé à l'arrière de celui-ci.

A l'heure actuelle, l'érecteur est généralement commandé par un opérateur situé à proximité immédiate de celui-ci, dans la zone dans laquelle sont posés les voussoirs.

Toutefois, ce pilotage par un opérateur présente plusieurs inconvénients.

D'une part, la présence d'un ou plusieurs opérateurs dans la zone de pose des voussoirs présente un risque pour la sécurité de ceux-ci.

D'autre part, le temps de pose de chaque voussoir est élevé, notamment du fait qu'un ou plusieurs opérateurs contrôlent la position d'un voussoir mis en place par rapport aux voussoirs déjà posés, et que les éventuels ajustements de position sont effectués de manière empirique par le(s)dit(s) opérateur(s). Cette tâche est en outre particulièrement pénible puisqu'elle impose de multiples déplacements à l'opérateur.

Il serait donc souhaitable de pouvoir automatiser la pose des voussoirs en vue d'une part d'éviter la présence d'opérateurs dans la zone de pose et d'autre part d'améliorer la qualité et le temps de pose des voussoirs.

L'érecteur étant une machine hydraulique de grande capacité et de grande portée, avec des flèches importantes en fonctionnement, son positionnement est peu précis et répétable. Ces défauts sont accentués par l'usure importante et l'augmentation significative des jeux de fonctionnement sur la durée d'exploitation du tunnelier.

Le document FR 2 745 327 décrit un dispositif permettant d'assister un opérateur lors de la pose de voussoirs dans un tunnel. Ce dispositif met en oeuvre un capteur de mesure conçu pour mesurer la position d'un point de référence sur une face latérale d'un voussoir précédemment posé et d'un point de référence sur une face latérale du voussoir à poser, ces deux points de référence devant être placés en vis-à-vis l'un de l'autre. Ce dispositif comprend en outre un calculateur configuré pour déterminer, à partir de l'analyse des écarts de ces deux points de référence, la trajectoire de l'érecteur pour amener le voussoir à poser jusqu'à la position souhaitée par rapport au voussoir déjà posé.

Dans un premier temps, l'opérateur commande l'érecteur pour l'amener approximativement dans une position proche de celle du voussoir déjà posé. Le capteur de mesure est placé de telle sorte que le voussoir à poser et le voussoir déjà posés soient dans son champ de vision. L'analyse des écarts des points de référence est alors réalisée et transmise au calculateur.

Le calculateur calcule alors le déplacement de l'érecteur nécessaire pour amener le voussoir à poser dans sa position finale. Dans cette phase, l'érecteur est piloté automatiquement selon le déplacement défini par le calculateur, sans intervention de l'opérateur.

Toutefois, ce dispositif ne permet pas d'automatiser entièrement la pose du voussoir, la mise en place approximative restant effectuée par un opérateur. En outre, ce dispositif ne permet pas de contrôler la qualité de pose du voussoir (celle-ci devant être considérée selon différents degrés de liberté). De plus, le capteur de mesure est propre à l'érecteur de sorte à pouvoir suivre celui-ci.

Le document CN104747213 décrit un dispositif pour la pose automatisée de voussoirs. Ce dispositif comprend deux caméras tridimensionnelles destinées à acquérir des images d'une face du voussoir à poser et de la face d'un voussoir déjà posé destinées à être placées en contact l'une avec l'autre lors de la pose du voussoir. Ce dispositif comprend en outre un calculateur permettant d'analyser lesdites images pour déterminer un décalage entre lesdits voussoirs.

Dans un premier temps, le voussoir à poser est amené dans une position approximative par rapport à un voussoir déjà posé.

Dans un second temps, les caméras acquièrent des images des faces des segments destinées à être placées en vis-à-vis l'une de l'autre.

Ces images sont transmises au calculateur qui les traite pour en déduire un décalage entre les deux voussoirs défini d'une part par la distance entre les faces en vis-à-vis des deux voussoirs et la distance entre les faces avant des deux voussoirs. Si ce décalage est inférieur à un seuil déterminé, le voussoir est considéré comme correctement positionné et le procédé de pose dudit voussoir s'achève. Si ce décalage excède ledit seuil, le calculateur détermine les mouvements de l'érecteur nécessaires pour améliorer la précision de positionnement du voussoir, et l'érecteur est commandé automatiquement pour effectuer lesdits mouvements. Cette procédure peut être éventuellement itérée jusqu'à ce que le décalage entre les deux voussoirs soit inférieur au seuil déterminé.

Toutefois, le temps de traitement de telles images est relativement long, ce qui pénalise le temps de pose de chaque voussoir. De plus, ce dispositif ne prend pas en compte un éventuel décalage angulaire du voussoir à poser par rapport au voussoir déjà posé.

Le document JPH08-296400 décrit un érecteur permettant la pose automatisée de voussoirs comprenant un capteur de vision constitué de deux caméras dont l'une présente un champ de vision plus grand que celui de l'autre.

Dans un premier temps, le voussoir à poser est amené dans une position approximative par rapport à un voussoir déjà posé.

Un projecteur laser projette une raie lumineuse sur les faces destinées à être en contact du voussoir déjà posé et du voussoir à poser. Les caméras acquièrent des images de ladite raie lumineuse. Ces images sont transmises au calculateur qui les traite pour en déduire un décalage entre les deux voussoirs, ce décalage étant défini en position (distances dans trois directions) et en inclinaison (angles selon trois directions). Le calculateur détermine les mouvements de l'érecteur nécessaires pour aligner les deux voussoirs, et l'érecteur est commandé automatiquement pour effectuer lesdits mouvements.

Toutefois, l'érecteur décrit dans ce document a été conçu spécifiquement et l'automatisation qu'il procure n'est donc pas adaptable à un érecteur existant d'un tunnelier du marché.

Enfin, aucun des documents susmentionnés ne mentionnent la mise en place du premier voussoir ni celle de la clé (dernier voussoir permettant de fermer l'anneau dans le cas d'un anneau universel), qui présente une complexité de mise en place plus importante.

### BREVE DESCRIPTION DE L'INVENTION

Un but de l'invention est de concevoir un dispositif pour la pose automatisée d'un voussoir qui permette d'augmenter la sécurité des opérateurs et la productivité en minimisant l'intervention d'un opérateur, en minimisant le temps de pose de chaque voussoir et en améliorant la précision de pose. Ce dispositif doit permettre la pose d'un anneau complet, y compris le premier et le dernier voussoir constituant l'anneau, qu'il s'agisse d'un anneau universel ou non. Par ailleurs, ledit dispositif doit être compatible avec un érecteur d'un tunnelier du marché. Enfin, ledit dispositif doit être peu encombrant et facile à installer.

Conformément à l'invention, il est proposé un dispositif pour la prise et la pose automatisée d'un voussoir formant le revêtement d'un tunnel, destiné à être couplé à un tunnelier pourvu d'un érecteur à voussoirs, ledit érecteur comprenant des actionneurs équipés de capteurs de position, caractérisé en ce qu'il comprend :
- un contrôleur configuré pour communiquer avec un automate du tunnelier adapté pour commander l'actionnement de l'érecteur, et pour recevoir des données de mesure des capteurs de l'érecteur,
- un système de vision tridimensionnelle comprenant au moins quatre profilomètres laser, destiné à être fixé sur l'érecteur de sorte à (i) déterminer un écart en position et en inclinaison entre l'érecteur et un voussoir à saisir et (ii) acquérir l'ensemble des données d'analyse des écarts de la position et de l'inclinaison d'un voussoir à poser tenu par l'érecteur par rapport à au moins un voussoir et/ou un anneau de voussoirs déjà posé, ledit système de vision tridimensionnelle étant couplé au contrôleur pour lui transmettre lesdites données de mesure,
le contrôleur étant configuré pour recevoir un plan de pose de voussoirs et pour, grâce à un planificateur informatique adapté pour traiter lesdites données d'analyse du système de vision tridimensionnelle, les données de mesure des capteurs de l'érecteur et ledit plan de pose, déterminer une trajectoire de l'érecteur pour mettre en place ledit voussoir à poser en regard dudit voussoir et/ou anneau de voussoirs déjà posé, et communiquer des ordres de mouvement à l'automate du tunnelier pour actionner l'érecteur pour prendre le voussoir à poser et le déplacer selon ladite trajectoire.

De manière avantageuse, le dispositif comprend en outre une interface homme machine couplée au contrôleur.

Selon un mode de réalisation, le contrôleur est configuré pour envoyer à l'automate du tunnelier des ordres de mouvement d'au moins un vérin de poussée du tunnelier, pour libérer une zone de pose du voussoir à poser et pour sécuriser ledit voussoir une fois en place.

Selon une forme d'exécution avantageuse, le contrôleur est configuré pour reconnaître, à partir des données de mesure, un voussoir à poser.

Un autre objet de l'invention est un tunnelier incorporant un érecteur à voussoirs et un dispositif tel que décrit ci-dessus.

Un autre objet concerne un procédé de prise et de pose automatisée d'un voussoir pour former le revêtement d'un tunnel, par un tunnelier pourvu d'un érecteur de voussoirs et d'un automate adapté pour commander l'actionnement de l'érecteur, caractérisé en ce qu'il comprend :
- la fourniture d'un dispositif tel que décrit plus haut,
- la mise en place du système de vision tridimensionnelle sur l'érecteur,
- l'établissement d'une communication entre le contrôleur dudit dispositif et l'automate du tunnelier,
- la réception, par le contrôleur, d'un plan de pose de voussoirs et de données de mesure des capteurs de l'érecteur,
- la communication, par le contrôleur à l'automate du tunnelier, d'un ordre de préhension du voussoir à poser par l'érecteur,
- la préhension d'un voussoir à poser par l'érecteur,
- l'amenée dudit voussoir dans une zone de pose définie par le contrôleur,
- l'acquisition, par le système de vision tridimensionnelle, de données d'analyse des écarts de la position et de l'inclinaison du voussoir à poser par rapport à au moins un voussoir et/ou un anneau de voussoirs déjà posés,
- le traitement desdites données de mesure par le contrôleur pour, à partir desdites données de mesure du système de vision tridimensionnelle, des données de mesure des capteurs de l'érecteur et dudit plan de pose, déterminer une trajectoire de l'érecteur pour mettre en place ledit voussoir à poser en regard dudit voussoir et/ou anneau de voussoirs déjà posé,
- la communication, par le contrôleur, d'ordres de mouvement de l'érecteur à l'automate du tunnelier,
- l'actionnement de l'érecteur par l'automate selon lesdits ordres de mouvements, pour mettre en place le voussoir,
- la communication à l'automate, par le contrôleur, d'ordres de mouvement d'au moins un vérin de poussée du tunnelier,
- la sécurisation dudit voussoir par ledit vérin de poussée contre un anneau déjà posé.

Selon un mode de réalisation, ledit procédé comprend en outre, avant la préhension du voussoir à poser, la reconnaissance dudit voussoir par le contrôleur à partir des données fournies par le système de vision tridimensionnelle.

Selon un mode de réalisation, après la sécurisation du voussoir, le contrôleur envoie à l'automate du tunnelier un ordre de relâchement de la préhension du voussoir.

De manière particulièrement avantageuse, ledit procédé permet la pose automatisée d'un anneau complet de voussoirs, ledit procédé étant mis en oeuvre pour tous les voussoirs constituant ledit anneau.

Selon un mode de réalisation, le procédé comprend en outre, après la mise en place d'un anneau complet de voussoirs, la mesure, par le système de vision tridimensionnelle, d'au moins une caractéristique géométrique dudit anneau, comprenant l'angle de roulis, la planéité de la face avant, le centrage de l'anneau dans la jupe du tunnelier et/ou l'ovalisation de l'anneau.

Selon une forme d'exécution préférée, en fonction de ladite mesure de ladite caractéristique géométrique de l'anneau, le contrôleur ajuste le plan de pose des voussoirs de l'anneau suivant.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue d'ensemble de la partie arrière d'un bouclier de tunnelier,
- la figure 2 illustre un érecteur portant un voussoir en regard d'un anneau de voussoirs déjà posé,
- la figure 3 est un synoptique de fonctionnement du dispositif de pose automatisée selon l'invention et de son interface avec un tunnelier,
- la figure 4 est un schéma de principe du système de vision tridimensionnelle.

### DESCRIPTION DETAILLEE DE L'INVENTION

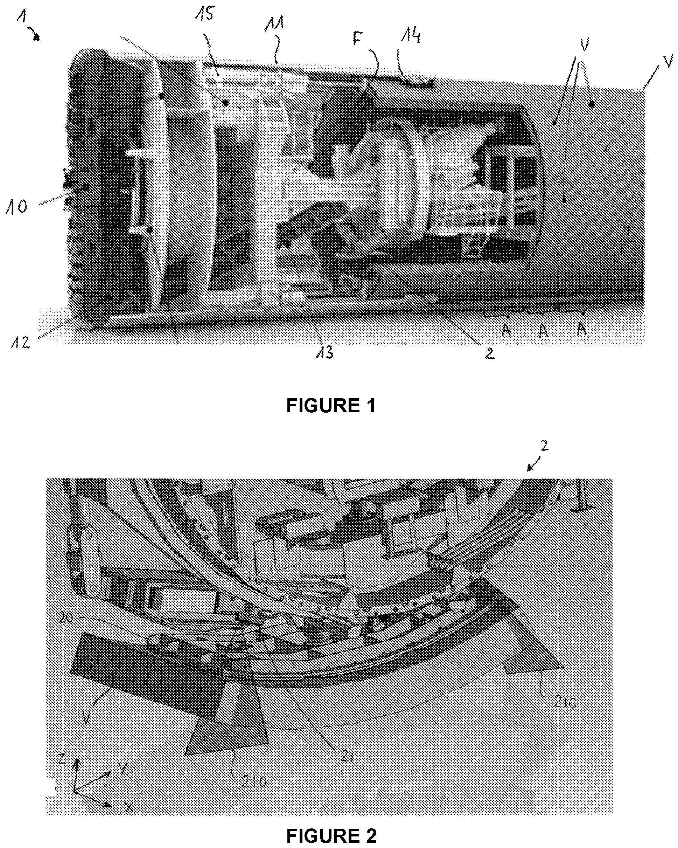

La figure 1 est une vue d'ensemble en coupe partielle de la partie arrière d'un bouclier de tunnelier pour lequel l'invention est susceptible d'être mise en oeuvre, étant précisé que l'invention n'est pas limitée en termes de type de tunnelier (tunnelier à pression de terre, à pression de boue, etc.).

De manière connue en elle-même, le tunnelier 1 comprend, dans sa partie avant, une tête de coupe 10 rotative et pourvue d'outils de coupe, destinée à l'abattage du terrain.

La tête de coupe 10 est fixée à l'avant d'un bouclier 11 qui assure la protection et l'étanchéité du travail d'excavation.

A l'arrière de la tête de coupe 10 se trouve une chambre d'abattage 12 dans laquelle sont transférés les déblais provenant du front de coupe.

Les déblais peuvent être extraits de la chambre d'abattage au moyen d'une vis d'extraction 13, en sortie de laquelle ils sont déposés sur un convoyeur afin d'être évacués. Selon le type de tunnelier, les moyens d'extraction peuvent varier et ne sont pas limités à la vis représentée.

Dans sa partie arrière, le bouclier 11 présente une jupe 14 sous laquelle sont mis en place les voussoirs V formant le revêtement du tunnel.

Le tunnelier 1 est pourvu de vérins de poussée 15 qui s'appuient sur la face avant F du dernier anneau A de voussoirs posé, lesdits vérins 15 étant destinés à exercer sur la tête de coupe 10 un effort de poussée vers l'avant pendant la phase d'abattage.

Pour mettre en place les voussoirs V, un érecteur à voussoirs 2 est agencé dans le bouclier, à l'abri de la jupe 14.

L'érecteur 2 est alimenté en voussoirs depuis l'extérieur du tunnelier par un système de convoyage (non représenté).

Comme on peut mieux le voir sur la figure 2, l'érecteur à voussoir 2 comprend un dispositif de préhension 20 présentant une forme sensiblement complémentaire de l'intérieur des voussoirs V. De manière préférée, la préhension est effectuée par dépression (effet ventouse généré par aspiration), de sorte qu'aucun outil ni aucune manipulation particulière n'est nécessaire pour la tenue des voussoirs sur l'érecteur. De manière alternative (non représentée), l'érecteur peut être pourvu d'organes de préhension aptes à passer au travers d'orifices ménagés dans les voussoirs.

L'érecteur est pourvu d'un certain nombre d'actionneurs (notamment, des vérins et des moteurs) procurant au moins six degrés de liberté en rotation et en translation au dispositif de préhension et autorisant un grand nombre de mouvements. Plus précisément, l'érecteur comprend un rotor et des vérins agencés entre le rotor et le dispositif de préhension.

L'érecteur peut fonctionner à une vitesse relativement élevée, dans une phase d'approche (positionnement grossier) du voussoir vis-à-vis de la zone de pose prévue, et à une vitesse relativement lente dans une phase de positionnement précis.

Pour la mise en oeuvre de l'invention, les actionneurs de l'érecteur sont instrumentés par tout type de capteur (par exemple, des capteurs d'élongation des vérins, des codeurs en rotation des moteurs, etc.) de sorte qu'il est possible à tout moment de connaître la position du dispositif de préhension par rapport à une position de référence, selon chaque degré de liberté. Comme indiqué plus haut, les informations de position fournies par ces capteurs ne sont que théoriques dans la mesure où elles ne tiennent pas compte des flèches, jeux de fonctionnement, etc. des différents composants de l'érecteur, qui peuvent être importants. Il n'est donc pas possible de se baser uniquement sur ces informations pour positionner précisément un voussoir. L'invention pallie cet inconvénient en équipant l'érecteur d'un système de vision tridimensionnelle qui assiste la préhension puis la mise en place précise des voussoirs.

Un automate du tunnelier permet de commander l'actionnement de l'érecteur en pilotant les différents actionneurs pour mouvoir le dispositif de préhension selon une trajectoire déterminée. Dans un tunnelier conventionnel, cette trajectoire est définie par un opérateur. Grâce à l'invention, ladite trajectoire est déterminée par un contrôleur et un planificateur qui seront décrits en détail plus bas. Toutefois, un mode de fonctionnement dans lequel un opérateur commande l'automate reste disponible en cas de nécessité.

Il est à noter qu'hormis le fait que les actionneurs de l'érecteur soit préalablement instrumentés, la mise en place du système de vision tridimensionnelle sur l'érecteur et une adaptation de l'automate pour accepter une interface avec le contrôleur susmentionné, l'invention ne nécessite pas de modifier l'érecteur ni d'autres éléments du tunnelier. En d'autres termes, l'invention s'applique à tout tunnelier et à tout érecteur à voussoirs existant.

Le système de vision tridimensionnelle comprend au moins quatre profilomètres laser. Chaque profilomètre comprend un laser apte à projeter une raie laser vers un objet (dans le cas d'espèce, un voussoir à poser et au moins une partie de la zone de pose, notamment un voussoir déjà posé et/ou un anneau de voussoirs déjà posé) et un dispositif d'acquisition du profil de l'objet. Les raies des différents profilomètres sont projetées de manière à déterminer des sections du voussoir et de son environnement distantes les unes des autres afin d'en déduire la position du voussoir dans l'espace.

Plus précisément, les quatre profilomètres sont utilisés simultanément lors de la préhension d'un nouveau voussoir à poser, ainsi que pour la pose du dernier voussoir d'un anneau. Les deux profilomètres orientés vers l'anneau A déjà posé, permettent de déterminer un écart en position et en orientation du voussoir à poser par rapport au précédent anneau. Un des deux profilomètres orientés vers l'anneau en cours de pose permet l'ajustement fin en position et en orientation du voussoir à poser pour former l'anneau.

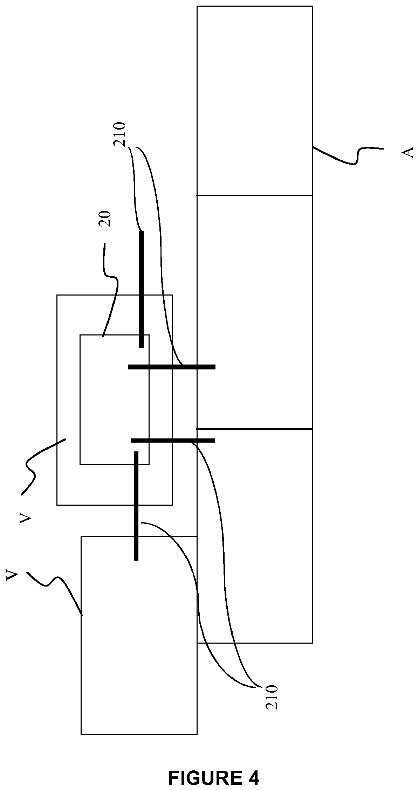

A cet effet, comme illustré sur la figure 4, deux profilomètres (dont la raie laser 210 est schématisée) sont orientés vers l'anneau A constitué de voussoirs V, qui est déjà posé, et deux autres profilomètres (dont la raie laser 210 est également schématisée) sont orientés sensiblement perpendiculairement aux deux premiers.

Les profilomètres sont choisis avec une plage de fonctionnement adaptée au débattement possible relatif du voussoir par rapport à son environnement pendant la phase d'approche. D'autre part, la résolution des profilomètres est choisie en fonction de la précision souhaitée pour les informations recueillies - on choisit typiquement une résolution inférieure à 1 mm. Enfin, les profilomètres sont choisis avec une fréquence d'acquisition très élevée afin de permettre un temps de traitement le plus faible possible.

Chaque profilomètre fournit une information locale, mais l'ensemble des profilomètres fournit une information globale grâce à une couche d'intelligence logicielle ; et exploitée par le contrôleur, permettant d'interpréter les mesures combinées des profilomètres.

Selon un mode de réalisation, les profilomètres sont solidaires du rotor.

La figure 2 illustre à titre d'exemple deux profilomètres 21 (seul l'un est visible) agencés sur l'érecteur 2 à distance du dispositif de préhension 20. Les raies laser émises par chacun des profilomètres sont schématisées selon le repère 210. Un repère orthonormé X, Y, Z a été représenté. De manière conventionnelle, l'axe X est l'axe longitudinal du tunnel, l'axe Y s'étend dans le sens de la largeur du tunnel et l'axe Z s'étend dans le sens de la hauteur du tunnel. L'angle de roulis est défini autour de l'axe X, l'angle de tangage est défini autour de l'axe Y et l'angle de lacet est défini autour de l'axe Z.

Par rapport à des caméras de vision tridimensionnelle, les profilomètres laser présentent l'avantage de nécessiter un traitement plus court pour permettre de déterminer la position et l'inclinaison d'un objet.

Le dispositif comprend en outre un processeur configuré pour recevoir les données de mesure du système de vision tridimensionnelle (typiquement, un profil du voussoir et de son environnement dans un plan X, Z) et pour traiter ces données de sorte à déterminer un écart en position et en inclinaison du voussoir à poser par rapport à au moins un voussoir et/ou un anneau de voussoirs déjà posés.

Le dispositif comprend également un contrôleur configuré pour communiquer avec ledit processeur et pour recevoir un plan de pose des voussoirs. Un tel plan de pose comprend des informations relatives au type de voussoir à poser, à un emplacement prévu pour chaque voussoir et à une séquence de pose desdits voussoirs.

De manière avantageuse, le dispositif comprend également un planificateur informatique adapté pour communiquer avec le contrôleur (le planificateur pouvant éventuellement être intégré au contrôleur) et configuré pour, à partir des données de mesure des capteurs de l'érecteur et, le cas échéant, des données d'analyse du système de vision tridimensionnelle, déterminer une trajectoire de l'érecteur vers une position finale définie par le plan de pose des voussoirs.

La préhension et la pose d'un voussoir comprennent quatre phases successives qui utilisent ou non le système de vision tridimensionnelle :
- dans une première phase (préhension d'un nouveau voussoir à poser), le système de vision tridimensionnelle est activé pour déterminer un écart en position et en orientation de l'érecteur par rapport à un voussoir à prendre ;
- dans une deuxième phase, dite aveugle (i.e. ne faisant pas intervenir le système de vision tridimensionnelle), le planificateur définit la trajectoire de l'érecteur vers une position intermédiaire déterminée à partir du plan de pose, à proximité de l'anneau déjà posé ;
- dans une troisième phase, qui met en oeuvre le système de vision tridimensionnelle, on met en place le voussoir à l'emplacement déterminé par le plan de pose ;
- dans une quatrième phase, aveugle, le planificateur définit une trajectoire de retour de l'érecteur vers un nouveau voussoir à prendre.

En général, le plan de pose est transmis à l'automate du tunnelier et validé par un opérateur au moyen d'une interface homme machine. De manière alternative, le plan de pose peut être transmis au contrôleur par l'intermédiaire d'une interface homme machine du dispositif selon l'invention. Ladite interface homme machine sera décrite en détail plus bas.

Le contrôleur est en outre configuré pour recevoir les informations de position fournies par les différents capteurs de position de l'érecteur, soit directement, soit par l'intermédiaire de l'automate du tunnelier.

A partir du plan de pose, des données d'analyse des écarts de position et d'inclinaison et des informations de position de l'érecteur, le contrôleur met en oeuvre un algorithme de calcul (générateur de mouvements ou planificateur) permettant de déterminer un ensemble de déplacements du dispositif de préhension de l'érecteur dans l'espace permettant d'amener le voussoir à poser à l'emplacement requis avec une précision de position et d'orientation optimale, et transmet à l'automate du tunnelier des ordres de mouvement de l'érecteur.

Eventuellement, la mise en place du voussoir peut être effectuée de manière itérative, par exemple en ajustant successivement la position du voussoir selon les différents degrés de liberté. A chaque pas de l'itération, le système de vision tridimensionnelle permet de déterminer une nouvelle position et une nouvelle inclinaison du voussoir à poser par rapport à son environnement, et le contrôleur détermine un nouvel ensemble de déplacements pour ajuster son positionnement.

A titre indicatif, la précision obtenue avec l'invention est de l'ordre de 1 mm, alors qu'un pilotage de l'érecteur par une télécommande actionnée par un opérateur procure une précision au mieux de l'ordre de 2 à 3 mm. Toutefois, les avantages procurés par l'invention ne se limitent pas à une augmentation de la précision en tant que telle mais permettent d'optimiser le compromis rapidité - précision de pose et d'augmenter la répétabilité et la fiabilité de la pose par rapport à un pilotage de l'érecteur par un opérateur.

L'interface homme machine est conçue pour permettre à un opérateur, d'une manière générale, de surveiller et contrôler le fonctionnement du dispositif de pose automatisée. Ainsi, l'interface homme machine permet de lancer une séquence de pose de voussoirs, de définir les modes de fonctionnement du dispositif (par exemple : entièrement automatique, semi-automatique, etc.), recueillir des informations de fonctionnement, dépanner le dispositif en cas d'alarme.

L'interface homme machine est également configurée pour, si nécessaire (par exemple dans le cas d'un incident), désactiver le dispositif de pose automatisée et permettre à un opérateur de piloter directement l'érecteur au moyen d'une télécommande utilisée conventionnellement dans les tunneliers existants. A cet effet, l'interface homme machine comprend un bouton d'arrêt d'urgence.

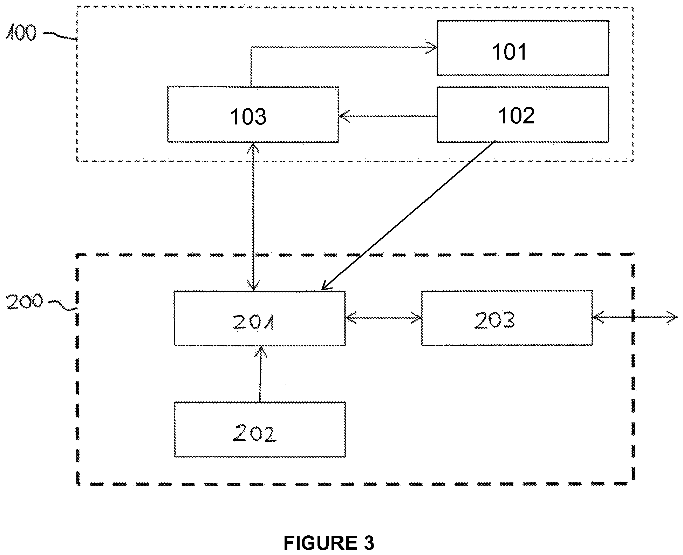

La figure 3 est un synoptique de fonctionnement du dispositif et de son interface avec le tunnelier.

Le tunnelier est schématisé par le bloc 100.

Le bloc 101 représente les actionneurs de l'érecteur à voussoir.

Le bloc 102 représente les capteurs de position de l'érecteur.

Le tunnelier comprend notamment un automate 103 permettant d'actionner l'érecteur. A cet effet, l'automate 103 reçoit des données de mesure des capteurs de position de l'érecteur 102. L'automate 103 commande les actionneurs 101 de l'érecteur en vue d'atteindre une position donnée du dispositif de préhension.

Le dispositif selon l'invention est schématisé par le bloc 200.

Le bloc 201 représente le contrôleur, le bloc 202 représente le système de vision tridimensionnelle et le bloc 203 représente l'interface homme machine.

Par ailleurs, le contrôleur 201 peut transmettre à l'interface homme machine 203 un rapport de pose en vue de son édition et/ou de sa mémorisation.

Le contrôleur 201 reçoit des données de mesure du système de vision tridimensionnelle 202 qui est fixé sur l'érecteur. Par l'intermédiaire de l'automate 103 du tunnelier, le contrôleur 201 reçoit en outre les données de mesure des capteurs 102 de l'érecteur et en déduit une position théorique de l'érecteur. De manière alternative, pour éviter la latence due à l'interrogation de l'automate, le contrôleur peut communiquer directement avec les capteurs 102.

A partir du plan de pose, des données de mesure des capteurs de l'érecteur et des données d'analyse des écarts du système de vision tridimensionnelle, le contrôleur 201 détermine une trajectoire de l'érecteur pour mettre en place un voussoir à poser en regard d'un voussoir et/ou un anneau de voussoirs déjà posé, et communique des ordres de mouvement à l'automate 103 du tunnelier pour actionner l'érecteur afin de prendre le voussoir à poser et le déplacer selon ladite trajectoire.

De manière particulièrement avantageuse, le dispositif comprend en outre un dispositif de sécurité (non représenté), par exemple une barrière immatérielle qui permet de désactiver le dispositif si un opérateur fait irruption dans la zone de travail de l'érecteur.

Le fonctionnement du dispositif est le suivant.

Un plan de pose est transmis au contrôleur.

De manière connue en elle-même, un voussoir à poser est placé à proximité de l'érecteur.

De manière particulièrement avantageuse, une reconnaissance dudit voussoir peut être mise en oeuvre par le dispositif. En effet, tous les voussoirs destinés à former un anneau ne sont pas nécessairement identiques, notamment sur l'anneau universel, et dans tous les cas sur le dernier voussoir (clé) et les voussoirs adjacents (contre-clés) qui présentent généralement des dépouilles plus importantes que les autres voussoirs.

A cet effet, le système de vision tridimensionnelle est activé de manière à acquérir un profil tridimensionnel du voussoir. Ce profil est comparé par le contrôleur à un profil de référence inclus dans le plan de pose.

De manière alternative, la reconnaissance du voussoir à poser peut être effectuée par tout autre moyen à la disposition de l'homme du métier, tel qu'un lecteur adapté pour lire un code à barres ou un code matriciel apposé sur chaque voussoir. Le code lu est comparé par le contrôleur à un code de référence inclus dans le plan de pose.

Si le contrôleur détecte que le voussoir présenté n'est pas le voussoir à poser selon le plan de pose, il émet une alerte. Un changement de voussoir peut alors être effectué et la procédure de reconnaissance peut reprendre avec le voussoir de remplacement.

Si le contrôleur détecte que le voussoir présenté est bien le voussoir à poser, il envoie à l'automate du tunnelier des ordres de mouvement de l'érecteur pour prendre le voussoir à poser. L'automate active alors les actionneurs de l'érecteur pour placer le dispositif de préhension en regard du voussoir et actionne la préhension (par exemple en générant une dépression procurant un effet ventouse) pour solidariser le voussoir à poser au dispositif de préhension. Dans la phase de préhension, le système de vision tridimensionnelle permet le bon positionnement du dispositif de préhension par rapport au voussoir, le contrôleur pouvant déterminer la position et l'inclinaison du voussoir à poser par rapport au dispositif de préhension.

On notera que, bien qu'avantageuse, cette reconnaissance du voussoir à poser n'est qu'optionnelle. En variante, on peut prévoir que le contrôleur envoie à l'automate du tunnelier des ordres de mouvement de l'érecteur pour saisir le voussoir présenté sans avoir vérifié au préalable la conformité dudit voussoir, cette vérification étant effectuée par un opérateur en amont de la chaîne d'approvisionnement du voussoir vers l'érecteur.

Afin de libérer la zone destinée à la pose du voussoir, le contrôleur envoie à l'automate du tunnelier un ordre de mouvement du ou des vérins de poussée en appui dans cette zone contre le dernier anneau.

Une fois le voussoir saisi par l'érecteur, le contrôleur envoie à l'automate du tunnelier des ordres de mouvement de l'érecteur pour amener le voussoir approximativement à l'emplacement prévu. Pour cela, le contrôleur utilise les informations de position de l'érecteur et le plan de pose. Dans cette phase d'approche grossière, une distance de sécurité de l'érecteur et du voussoir vis-à-vis de l'environnement de la position finale du voussoir est respectée, afin de ne pas risquer de collision. Comme indiqué plus haut, cette phase de déplacement met en œuvre le planificateur, le système de vision tridimensionnelle n'étant pas utilisé.

Une fois cette position approximative atteinte, le système de vision tridimensionnelle est activé pour acquérir des données de mesure de la position et de l'inclinaison du voussoir à poser par rapport à son environnement final, c'est-à-dire un anneau déjà posé et/ou un voussoir déjà posé. Ces données de mesure permettent de déterminer précisément l'écart entre le voussoir et le référentiel que constitue cet environnement final. Cet écart est caractérisé par des distances en translation (par exemple selon trois axes X, Y, Z d'un repère orthonormé) et par des angles en rotation (par exemple roulis, tangage et lacet).

A partir de cet écart, le contrôleur détermine un ensemble de déplacements du dispositif de préhension de l'érecteur dans l'espace permettant d'amener le voussoir à poser à l'emplacement requis. Cette détermination combine les informations de position de l'érecteur et les données d'analyse des écarts du système de vision tridimensionnelle.

Le contrôleur transmet donc à l'automate du tunnelier des ordres de mouvement de l'érecteur.

Une fois le voussoir mis en place, le contrôleur envoie à l'automate du tunnelier des ordres de mouvement d'un vérin de poussée pour sécuriser le voussoir.

Le contrôleur envoie alors à l'automate du tunnelier un ordre de désolidarisation du voussoir vis-à-vis du dispositif de préhension de l'érecteur, par exemple un ordre de relâchement de la dépression exercée si le voussoir est maintenu sur le dispositif de préhension par effet ventouse. On notera que la sécurité du système de préhension n'est pas affectée par le dispositif selon l'invention, celle-ci restant assurée par l'automate du tunnelier qui n'exécute la solidarisation que si les conditions de sécurité sont remplies.

L'érecteur est alors ramené dans une position de repos avant la mise en place d'un nouveau voussoir selon la procédure qui vient d'être décrite. Comme indiqué plus haut, cette phase de déplacement est pilotée par le planificateur, sans l'assistance du système de vision tridimensionnelle.

Le contrôleur peut enregistrer des données sur la pose de chaque voussoir et éditer éventuellement un rapport de pose, ce qui permet d'assurer la traçabilité de la réalisation du tunnel.

De manière avantageuse, après la mise en place d'un anneau complet de voussoirs, le dispositif de pose automatisée est en mesure de mesurer, grâce au système de vision tridimensionnelle, au moins une caractéristique géométrique dudit anneau. Cette caractéristique géométrique peut notamment être :
- l'angle de roulis (afin de s'assurer que les zones d'appui ménagées sur les voussoirs pour les vérins de poussée sont bien en regard des vérins du tunnelier),
- la planéité de la face avant de l'anneau (un défaut de planéité de la face avant de l'anneau étant susceptible d'impliquer des variations des efforts de poussée des vérins),
- le centrage de l'anneau dans la jupe du tunnelier (cette information est utile d'une part pour connaître la position de l'anneau dans l'espace, qui est nécessaire au guidage du tunnelier : la position du bouclier étant connue dans le référentiel du système de guidage, la position de l'anneau par rapport à la jupe du bouclier permet de déterminer la position de l'anneau dans le référentiel du système de guidage ; d'autre part pour éviter toute friction de la jupe sur les anneaux)
- et/ou l'ovalisation de l'anneau.

Le contrôle de ces caractéristiques est utile dans la mesure où il peut influer sur la mise en place de l'anneau suivant et/ou sur le fonctionnement du tunnelier. Ainsi, par exemple, si l'on aligne les bords des anneaux, une éventuelle ovalisation est susceptible de se propager aux anneaux suivants. De même, un défaut de planéité de la face avant de l'anneau est susceptible de se répercuter sur la face avant de l'anneau suivant.

De manière avantageuse, la ou les caractéristique(s) mesurée(s) est(sont) donc prise(s) en compte par le contrôleur pour ajuster le plan de pose de l'anneau suivant et compenser ainsi les éventuels défauts de pose de l'anneau qui vient d'être posé.

Par ailleurs, lesdites caractéristiques peuvent être enregistrées avec le rapport de pose pour assurer la traçabilité de la construction du tunnel.

Un avantage du dispositif qui vient d'être décrit est qu'il permet de poser de manière précise l'ensemble des voussoirs constituant un anneau, y compris les deux voussoirs dont la pose présente une complexité plus importante, à savoir :
- le premier voussoir d'un anneau, compte tenu du fait qu'il n'existe pas encore de voussoir adjacent, et
- le dernier voussoir (ou clé), qui doit être inséré entre deux voussoirs déjà posés.

Dans le cas du premier voussoir d'un anneau, comme indiqué plus haut, le balayage de la zone de pose par l'érecteur équipé d'un profilomètre permet de déterminer via des points et/ou zones remarquables l'angle de roulis du premier voussoir par rapport au dernier anneau posé, et le contrôleur peut prendre en compte cette mesure pour déterminer la trajectoire de pose du voussoir.

Dans le cas du dernier voussoir, le système de vision tridimensionnelle permet au contrôleur de déterminer l'espace disponible pour monter le dernier voussoir, qui, s'il est trop important ou trop faible, peut déclencher une intervention d'un opérateur.

L'invention permet donc de poser successivement plusieurs voussoirs - voire plusieurs anneaux consécutifs - sans aucune intervention humaine dans la zone de travail de l'érecteur, ce qui minimise les risques encourus par les opérateurs et la pénibilité de leur travail.

Par ailleurs, comme déjà indiqué plus haut, le dispositif automatisé permet de fiabiliser la pose des anneaux et contribue à la traçabilité de la réalisation du tunnel en enregistrant les plans de pose effectivement réalisés et les caractéristiques contrôlées sur les anneaux posés.

### REFERENCES

FR 2 745 327
CN104747213
JPH08-296400

## Revendications

1. Dispositif pour la prise et la pose automatisée d'un voussoir formant le revêtement d'un tunnel, destiné à être couplé à un tunnelier (1) pourvu d'un érecteur à voussoirs (2), ledit érecteur comprenant des actionneurs (101) équipés de capteurs de position (102), **caractérisé en ce qu'**il comprend :
- un contrôleur (201) configuré pour communiquer avec un automate (103) du tunnelier adapté pour commander l'actionnement de l'érecteur, et pour recevoir des données de mesure des capteurs de l'érecteur,
- un système de vision tridimensionnelle (202) comprenant au moins quatre profilomètres laser (21), destiné à être fixé sur l'érecteur de sorte à (i) déterminer un écart en position et en inclinaison entre l'érecteur et un voussoir à saisir et (ii) acquérir l'ensemble des données d'analyse des écarts de la position et de l'inclinaison d'un voussoir (V) à poser tenu par l'érecteur par rapport à au moins un voussoir et/ou un anneau de voussoirs déjà posé, ledit système de vision tridimensionnelle étant couplé au contrôleur pour lui transmettre lesdites données de mesure,
le contrôleur (201) étant configuré pour recevoir un plan de pose de voussoirs et pour, grâce à un planificateur informatique adapté pour traiter lesdites données d'analyse du système de vision tridimensionnelle (202), les données de mesure des capteurs (102) de l'érecteur et ledit plan de pose, déterminer une trajectoire de l'érecteur pour mettre en place ledit voussoir (V) à poser en regard dudit voussoir et/ou anneau (A) de voussoirs déjà posé, et communiquer des ordres de mouvement à l'automate (103) du tunnelier pour actionner l'érecteur (2) pour prendre le voussoir (V) à poser et le déplacer selon ladite trajectoire.

2. Dispositif selon la revendication 1, comprenant en outre une interface homme machine (203) couplée au contrôleur (201).

3. Dispositif selon l'une des revendications 1 à 2, dans lequel le contrôleur (201) est configuré pour envoyer à l'automate (103) du tunnelier des ordres de mouvement d'au moins un vérin de poussée (15) du tunnelier, pour libérer une zone de pose du voussoir à poser et pour sécuriser ledit voussoir une fois en place.

4. Dispositif selon l'une des revendications 1 à 3, dans lequel le contrôleur (201) est configuré pour reconnaître, à partir des données de mesure, un voussoir à poser.

5. Tunnelier comprenant un érecteur à voussoirs (2) et un dispositif selon l'une des revendications 1 à 4.

6. Procédé de prise et de pose automatisée d'un voussoir (V) pour former le revêtement d'un tunnel, par un tunnelier pourvu d'un érecteur de voussoirs (2) et d'un automate (103) adapté pour commander l'actionnement de l'érecteur, **caractérisé en ce qu'**il comprend :
- la fourniture d'un dispositif selon l'une des revendications 1 à 4,
- la mise en place du système de vision tridimensionnelle (202) sur l'érecteur (2),
- l'établissement d'une communication entre le contrôleur (201) dudit dispositif et l'automate (103) du tunnelier,
- la réception, par le contrôleur (201), d'un plan de pose de voussoirs et de données de mesure des capteurs (102) de l'érecteur,
- la communication, par le contrôleur (201) à l'automate (103) du tunnelier, d'un ordre de préhension du voussoir (V) à poser par l'érecteur,
- la préhension d'un voussoir (V) à poser par l'érecteur (2),
- l'amenée dudit voussoir (V) dans une zone de pose définie par le contrôleur (201),
- l'acquisition, par le système de vision tridimensionnelle (202), de données d'analyse des écarts de la position et de l'inclinaison du voussoir (V) à poser par rapport à au moins un voussoir (V) et/ou un anneau (A) de voussoirs déjà posés,
- le traitement desdites données de mesure par le contrôleur (201) pour, à partir desdites données de mesure du système de vision tridimensionnelle, des données de mesure des capteurs (102) de l'érecteur et dudit plan de pose, déterminer une trajectoire de l'érecteur pour mettre en place ledit voussoir à poser en regard dudit voussoir et/ou anneau de voussoirs déjà posé,
- la communication, par le contrôleur (201), d'ordres de mouvement de l'érecteur (2) à l'automate (103) du tunnelier,
- l'actionnement de l'érecteur (2) par l'automate (103) selon lesdits ordres de mouvements, pour mettre en place le voussoir,
- la communication à l'automate (103), par le contrôleur (201), d'ordres de mouvement d'au moins un vérin de poussée (15) du tunnelier,
- la sécurisation dudit voussoir (V) par ledit vérin de poussée (15) contre un anneau (A) déjà posé.

7. Procédé selon la revendication 6, comprenant en outre, avant la préhension du voussoir (V) à poser, la reconnaissance dudit voussoir par le contrôleur (201) à partir des données fournies par le système de vision tridimensionnelle (202).

8. Procédé selon l'une des revendications 6 à 7, dans lequel, après la sécurisation du voussoir (V), le contrôleur (201) envoie à l'automate (103) du tunnelier un ordre de relâchement de la préhension du voussoir.

9. Procédé de pose automatisée d'un anneau complet de voussoirs, **caractérisé en ce que** l'on met en oeuvre le procédé selon l'une des revendications 6 à 8 pour tous les voussoirs constituant ledit anneau (A).

10. Procédé selon la revendication 9, comprenant en outre, après la mise en place d'un anneau complet de voussoirs, la mesure, par le système de vision tridimensionnelle (202), d'au moins une caractéristique géométrique dudit anneau (A), comprenant l'angle de roulis, la planéité de la face avant, le centrage de l'anneau dans la jupe du tunnelier et/ou l'ovalisation de l'anneau.

11. Procédé selon la revendication 10, dans lequel, en fonction de ladite mesure de ladite caractéristique géométrique de l'anneau (A), le contrôleur ajuste le plan de pose des voussoirs de l'anneau suivant.

## Patentansprüche

1. Vorrichtung zum Ergreifen und automatisierten Anbringen eines Bogensegments, das die Beschichtung eines Tunnels bildet, die dazu bestimmt ist, mit einer Tunnelbohrmaschine (1) gekoppelt zu sein, die mit einem Bogensegmentaufrichter (2) versehen ist, wobei der genannte Aufrichter Stellglieder (101) umfasst, die mit Positionssensoren (102) ausgerüstet sind, **dadurch gekennzeichnet, dass** sie umfasst:
- einen Kontroller (201), der zum Kommunizieren mit einem Automaten (103) der Tunnelbohrmaschine, der zum Steuern der Betätigung des Aufrichters geeignet ist, und um Messdaten der Sensoren des Aufrichters zu empfangen ausgestaltet ist;
- dreidimensionales Ansichtssystem (202), umfassend wenigstens vier Laser-Profilmesser (21), das dazu bestimmt ist, auf dem Aufrichter derart befestigt zu sein, dass (i) eine Positions- und Neigungsabweichung zwischen dem Aufrichter und dem zu erfassenden Bogensegment bestimmt ist, und (ii) alle Analysedaten der Abweichungen von der Position und der Neigung eines anzubringenden Bogensegments (V) zu erwerben, das vom Aufrichter in Bezug auf wenigstens ein Bogensegment und / oder einen bereits angebrachten Bogensegment-Ring gehalten ist, wobei das genannte dreidimensionale Ansichtssystem an den Kontroller gekoppelt ist, um die genannten Messdaten auf ihn zu übertragen,
wobei der Kontroller (201) ausgestaltet ist, um einen Anbringungsplan von Bogensegmenten zu empfangen und um dank eines IT-Planers, der zum Verarbeiten der genannten Analysedaten des dreidimensionalen Ansichtssystems (202), der Messdaten der Sensoren (102) des Aufrichters und des genannten Anbringungesplants geeignet ist, eine Bahn des Aufrichters zu bestimmen, um das genannte anzubringende Bogensegment (V) gegenüber dem genannten Bogensegment und / oder bereits angebrachten Bogensegment-Ring (A)anzuordnen und dem Automaten (103) der Tunnelbohrmaschine Bewegungsbefehle zu übermitteln, um den Aufrichter (2) zu betätigen, um das anzubringende Bogensegment (V) zu ergreifen und es gemäß der genannten Bahn zu verschieben.

2. Vorrichtung gemäß Anspruch 1, umfassend darüber hinaus eine Schnittstelle Mensch / Maschine (203), die an den Kontroller (201) gekoppelt ist.

3. Vorrichtung gemäß einem der Ansprüche 1 bis 2, bei der der Kontroller (201) ausgestaltet ist, um Bewegungsbefehle wenigstens eines Schubzylinders (15) der Tunnelbohrmaschine an den Automaten (103) der Tunnelbohrmaschine zu senden, um eine Anbringzone des anzubringenden Bogensegments freizusetzen und um das genannte Bogensegment zu sichern, sobald es angeordnet ist.

4. Vorrichtung gemäß einem der Ansprüche 1 bis 3, bei der der Kontroller (201) ausgestaltet ist, um ausgehend von den Messdaten, ein anzubringendes Bogensegment zu erkennen.

5. Tunnelbohrmaschine, umfassend einen Bogensegmentaufrichter (2) und eine Vorrichtung gemäß einem der Ansprüche 1 bis 4.

6. Verfahren zum automatisierten Ergreifen und Anbringen eines Bogensegments (V) zum Bilden der Beschichtung eines Tunnels durch eine Tunnelbohrmaschine, die mit einem Bogensegmentaufrichter (2) und einem Automaten (103) versehen ist, der zum Steuern der Betätigung des Aufrichters geeignet ist, **dadurch gekennzeichnet, dass** es umfasst:
- die Lieferung einer Vorrichtung gemäß einem der Ansprüche 1 bis 4,
- das Einsetzen des dreidimensionalen Ansichtssystems (202) auf dem Aufrichter (2),
- den Aufbau einer Kommunikation zwischen dem Kontroller (201) der genannten Vorrichtung und dem Automaten (103) der Tunnelbohrmaschine,
- den Empfang eines Anbringungsplans von Bogensegmenten und Messdaten der Sensoren (102) des Aufrichters durch den Kontroller (102),
- die Übermittlung eines Greifbefehls des vom Aufrichter anzubringenden Bogensegments (V) durch den Kontroller (201) an den Automaten (103) der Tunnelbohrmaschine,
- das Ergreifen eines vom Aufrichter (2) anzubringenden Bogensegments (V),
- das Zuführen des genannten Bogensegments (V) in eine vom Kontroller (201) definierte Anbringzone,
- das Erwerben von Analysedaten der Abweichungen der Position und der Neigung des anzubringenden Bogensegments (V) durch das dreidimensionale Ansichtssystem (202) in Bezug auf wenigstens ein Bogensegment (V) und / oder einen bereits angebrachten Bogensegmentring,
- die Verarbeitung der genannten Messdaten durch den Kontroller (201) ausgehend von den genannten Messdaten des dreidimensionalen Ansichtssystems, den Messdaten der Sensoren (202) des Aufrichters und des genannten Anbringungsplans, zum Bestimmen einer Bahn des Aufrichters, um das genannte, anzubringende Bogensegment gegenüber dem genannten Bogensegment und / oder dem bereits angebrachten Bogensegmentring anzuordnen,
- das Übermitteln von Bewegungsbefehlen des Aufrichters (2) an den Automaten (103) der Tunnelbohrmaschine durch den Kontroller (201),
- die Betätigung des Aufrichters (2) durch den Automaten (103) gemäß den genannten Bewegungsbefehlen, um das Bogensegment anzuordnen,
- die Übermittlung von Bewegungsbefehlen wenigstens eines Schubzylinders (15) der Tunnelbohrmaschine an den Automaten (103) durch den Kontroller (201),
- die Sicherung des genannten Bogensegments (V) durch den genannten Schubzylinder (15) gegen einen bereits angebrachten Ring (A).

7. Verfahren gemäß Anspruch 6, darüber hinaus umfassend vor dem Ergreifen des anzubringenden Bogensegments (V) das Erkennen des genannten Bogensegments durch den Kontroller (201) ausgehend von den vom dreidimensionalen Ansichtssystem (202) gelieferten Daten.

8. Verfahren gemäß einem der Ansprüche 6 bis 7, bei dem nach der Sicherung des Bogensegments (V) der Kontroller (201) einen Loslassbefehl des Greifens des Bogensegments an den Automaten (103) der Tunnelbohrmaschine sendet.

9. Automatisches Anbringverfahren eines kompletten Bogensegmentrings, **dadurch gekennzeichnet, dass** das Verfahren gemäß einem der Ansprüche 6 bis 8 für alle den genannten Ring (A) bildenden Bogensegmente umgesetzt wird.

10. Verfahren gemäß Anspruch 9, darüber hinaus umfassend das Messen wenigstens eines geometrischen Merkmals des genannten Rings (A), umfassend den Querneigungswinkel, die Ebenheit der Vorderseite, die Zentrierung des Rings in der Schürze der Tunnelbohrmaschine und / oder die Ovalisierung des Rings durch das dreidimensionale Ansichtssystem (202) nach dem Einsetzen eines kompletten Bogensegmentrings.

11. Verfahren gemäß Anspruch 10, bei dem der Kontroller den Anbringungsplan der Bogensegmente des nachfolgenden Rings in Abhängigkeit von der genannten Messung des genannten geometrischen Merkmals des Rings (A) anpasst.

## Claims

1. A device for the automated picking up and laying of a segment forming the lining of a tunnel, intended to be coupled to a tunnel-boring machine (1) provided with a segment erector (2), said erector comprising actuators (101) equipped with position sensors (102), **characterized in that** it comprises:
- a controller (201) configured to communicate with an automated system (103) of the tunnel-boring machine adapted to control the actuation of the erector, and to receive measurement data from the erector sensors,
- a three-dimensional vision system (202) comprising at least four laser profilometers (21), intended to be attached to the erector so as to (i) determine a deviation in position and in inclination between the erector and a segment to be gripped and (ii) acquire the set of data analyzing the deviations in the position and inclination of a segment (V) to be laid which is held by the erector relative to at least one segment and/or one ring of segments previously laid, said three-dimensional vision system being coupled to the controller to transmit said measurement data thereto,
the controller (201) being configured to receive a segment laying plan and, thanks to a computer planner adapted to process said analysis data of the three-dimensional vision system (202), the measurement data of the erector sensors (202) and said laying plan, to determine a path of the erector in order to place said segment (V) to be laid opposite said segment and/or ring (A) of segments previously laid, and to communicate movement orders to the automated system (103) of the tunnel-boring machine in order to actuate the erector (2) to pick up the segment (V) to be laid and displace it according to said path.

2. The device according to claim 1, further comprising a man-machine interface (203) coupled to the controller (201).

3. The device according to one of claims 1 to 2, wherein the controller (201) is configured to send, to the automated system (103) of the tunnel-boring machine, orders to move at least one thrust cylinder (15) of the tunnel-boring machine, to release an area for laying the segment to be laid and to secure said segment once it is in place.

4. The device according to one of claims 1 to 3, wherein the controller (201) is configured to recognize, from the measurement data, a segment to be laid.

5. A tunnel-boring machine comprising a segment erector (2) and a device according to one of claims 1 to 4.

6. A method for the automated picking up and laying of a segment (V) to form the lining of a tunnel, by a tunnel-boring machine provided with a segment erector (2) and with an automated system (103) adapted to control the actuation of the erector, **characterized in that** it comprises:
- providing a device according to one of claims 1 to 4,
- placing the three-dimensional vision system (202) on the erector (2),
- establishing a communication between the controller (201) of said device and the automated system (103) of the tunnel-boring machine,
- receiving, by the controller (201), a segment laying plan and measurement data from the sensors (102) of the erector,
- communicating, by the controller (201) to the automated system (103) of the tunnel-boring machine, an order to grip the segment (V) to be laid by the erector,
- gripping a segment (V) to be laid by the erector (2),
- bringing said segment (V) into a laying area defined by the controller (201),
- acquiring, by the three-dimensional vision system (202), data analyzing the deviations in the position and inclination of the segment (V) to be laid relative to at least one segment (V) and/or one ring (A) of segments previously laid,
- processing said measurement data by the controller (201) to determine, from said measurement data of the three-dimensional vision system, measurement data of the erector sensors (102) and of said laying plan, a path of the erector in order to place said segment to be laid opposite said segment and/or ring of segments previously laid,
- communicating, by the controller (201), orders to move the erector (2) to the automated system (103) of the tunnel-boring machine,
- actuating the erector (2) by the automated system (103) according to said movement orders, to place the segment,
- communicating to the automated system (103), by the controller (201), orders to move at least one thrust cylinder (15) of the tunnel-boring machine,
- securing said segment (V) by said thrust cylinder (15) against a ring (A) previously laid.

7. The method according to claim 6, further comprising, prior to the gripping of the segment (V) to be laid, the recognition of said segment by the controller (201) from the data provided by the three-dimensional vision system (202).

8. The method according to one of claims 6 to 7, wherein, after the securing operation of the segment (V), the controller (201) sends, to the automated system (103) of the tunnel-boring machine, an order to release the gripping of the segment.

9. A method for the automated laying of a complete ring of segments, **characterized in that** the method according to one of claims 6 to 8 is implemented for all the segments constituting said ring (A).

10. The method according to claim 9, further comprising, after the placement of a complete ring of segments, the measurement, by the three-dimensional vision system (202), of at least one geometric characteristic of said ring (A), comprising the roll angle, the flatness of the front face, the centering of the ring in the skirt of the tunnel-boring machine and/or the ovalization of the ring.

11. The method according to claim 10, wherein, according to said measurement of said geometrical characteristic of the ring (A), the controller adjusts the plan for laying the segments of the next ring.
